# EUROPEAN PATENT SPECIFICATION

(11) **EP 1 631 486 B1**
(45) Date of publication and mention of the grant of the patent: **13.08.2008**
(21) Application number: 04735586.2
(22) Date of filing: 01.06.2004
(51) Int. Cl.: B62D 31/02, B62D 25/20

(54) **BODY OF VEHICLE**
FAHRZEUGKAROSSERIE
CORPS DE VEHICULE

(30) Priority: 06.06.2003 FI 20030852
(43) Date of publication of application: 08.03.2006
(73) Proprietor: Kulojärvi, Tauno, 33250 Tampere (FI)
(72) Inventor: Kulojärvi, Tauno, 33250 Tampere (FI)
(74) Representative: Kuosmanen, Timo
(86) International application number: PCT/FI2004/000338
(87) International publication number: WO 2004/108505

(56) References cited:
- BE-A- 530 512
- GB-A- 595 640
- US-A- 3 794 374
- US-A- 4 049 312

## Description

### BACKGROUND OF THE INVENTION

The invention relates to a body of a vehicle, comprising: a main body formed of at least one longitudinal beam and a plurality of transverse beams, the beams being interconnected; a first floor provided on the side of an upper surface of the main body; a second floor provided on the side of a lower surface of the main body, at a predetermined vertical distance from the main body, the second floor being supported against the main body; at least two partition walls which are arranged transversely with respect to the longitudinal axis of the main body and which reside substantially vertically between the main body and the second floor at a distance from one another, the partition walls and the floors thus forming at least one free space below the main body.

The bodies of vehicles, such as buses, typically comprise a main body formed of beams. Such a main body usually includes at least two longitudinal beams and a plurality of transverse beams. Above the main body resides the floor of a passenger compartment. Below the main body resides a luggage compartment, which includes a second floor. The luggage compartment is divided into sections by means of a plurality of vertical partition walls. Nowadays the partition walls comprise a lattice structure formed of metal tubes, a sheet of plywood or the like being fastened thereto. It is laborious and expensive to manufacture such a partition wall. In addition, the structure is heavy. GB-A-595 640 discloses a body structure including longitudinal beams and transverse beams. The longitudinal beams are curved downward at the rear of the body structure. US-A-3 794 374 discloses a transit vehicle body module including a pair of longitudinally spaced U-shaped carlines, which open downwardly. BE-A-530 512 discloses a body structure including sidewalls connected to each other by partition walls.

### BRIEF DESCRIPTION OF THE INVENTION

The object of the invention is to provide a novel and improved body of a vehicle.

The body of a vehicle according to the invention shows that the partition wall is a sheetlike piece immovably fastened at least to a transverse beam of the main body, that the partition wall comprises a horizontal lower edge provided with a first support section transverse with respect to the plane surface of the partition wall, and in that the first support section is arranged to support the second floor.

The idea underlying the invention is that the second floor, which resides below the main body of the vehicle is supported against the main body by means of the partition walls. A partition wall is a sheetlike piece whose lower edge is provided with a transverse support section arranged to support the second floor.

An advantage of the invention is that the partition wall serves both as a space-dividing component and as a load-bearing component, which means that the body structure can be simpler and lighter. Furthermore, such a sheetlike structure is quick to manufacture and it bears well vertical tensile stresses.

The idea underlying an embodiment of the invention is that the partition wall is arranged to extend above the main body, and that an upper edge of the partition wall is provided with a second support section arranged to support the floor residing above the main body. Hence, both floors are supported in a simple manner. The solution makes the body quicker to manufacture.

The idea underlying an embodiment of the invention is that the partition wall is immovably fastened to a longitudinal beam and a transverse beam that are included in the main body, the partition wall being arranged to contribute to the fastening between the beams as well as to receive forces active between the beams. This makes the body extremely rigid and durable.

The idea underlying an embodiment of the invention is that the support section is a bent section of a predetermined size provided in a horizontal edge of the partition wall. Such a bend is easy and quick to manufacture in modern sheet metal work machines. Furthermore, the support section and the rest of the partition wall constitute a uniform piece, which makes the structure highly durable against loads.

The idea underlying an embodiment of the invention is that the partition wall is a piece manufactured from a metal sheet, dimensioned to extend as a uniform piece from a first side of the body all the way to a second side thereof. Hence, the partition wall forms a uniform support element between the sides of the vehicle and, further, between the main body and the second floor. The sheetlike structure is highly capable of receiving a shear force in a direction parallel with the sheet, which effectively stiffens the body of the vehicle with respect to torsional stresses.

The idea underlying an embodiment of the invention is that the partition wall comprises a plurality of openings which are dimensioned and arranged such that portions residing between the openings form a lattice-like structure. Such a structure is light and relatively easy and quick to manufacture e.g. by waterjet cutting.

### BRIEF DESCRIPTION OF THE DRAWINGS

The invention will be described in closer detail in the following drawings, in which

Figure 1 is a schematic cross-sectional view showing a body of a vehicle according to the invention as seen in a longitudinal direction,

Figure 2 is a schematic cross-sectional view at A-A of a part of the body of Figure 1,

Figure 3 is a schematic view showing a partition wall according to the invention as seen in a longitudinal direction of a body,

Figure 4 is a schematic cross-sectional view at B-B of the partition wall shown in Figure 3,

Figure 5 is a schematic view showing a second partition wall of the invention as seen in a longitudinal direction of a body,

Figure 6 is a schematic view showing a third partition wall according to the invention as seen in a longitudinal direction of a body,

Figure 7 is a schematic view showing a part of a second body according to the invention as seen in a longitudinal direction,

Figure 8 is a schematic view showing a part of a third body according to the invention as seen in a longitudinal direction, and

Figure 9 is a schematic side view showing a detail of the body according to the invention.

For the sake of clarity, the figures show the invention in a simplified manner. Like reference numbers identify like elements.

### DETAILED DESCRIPTION OF THE INVENTION

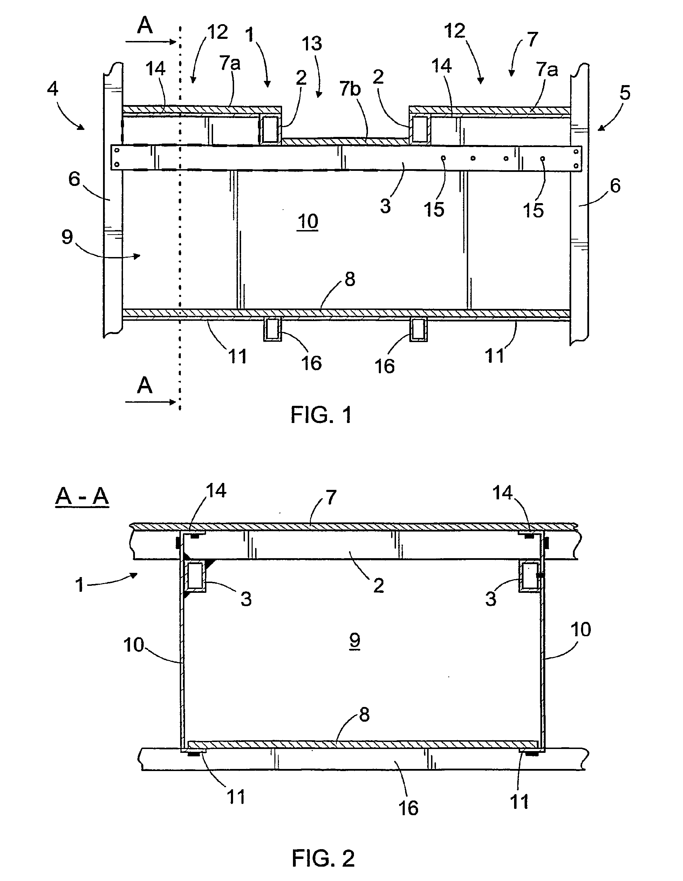

The body shown in Figure 1 comprises a main body 1 formed of longitudinal beams 2 and transverse beams 3, which are interconnected. Typically, the number of longitudinal beams 2 is at least two, and the beams are arranged at a distance from one another. In some cases, one firm longitudinal beam may suffice. Typically, a plurality of transverse beams 3 is provided, and they may extend as a uniform piece from a first side 4 of the body to a second side 5 thereof. Ends of the transverse beams 3 may be provided with vertical beams 6 to which sheets forming a side surface of a vehicle may be fastened. Screw joints or welded joints, for example, may be used between the beams 2, 3, 6. Furthermore, the material of the beams 2, 3, 6 may be a suitable metal, such as steel or aluminium, and their cross-sectional profile may be selected case-specifically. For the sake of simplicity, the figure shows the beams 2, 3, 6 as tubular beams of a rectangular cross-section.

The side of an upper surface of the main body 1 is provided with a first floor 7, which may consist of one or more parts. Furthermore, the side of a lower surface of the main body 1 is provided with a second floor 8, which may also consist of one or more parts. The second floor 8 resides at a predetermined vertical distance from the main body 1 so that an open space 9 is provided between the second floor 8 and the main body 1, the space being shown in Figure 2. The open space 9 may be used e.g. as a luggage compartment. Furthermore, at least two vertical partition walls 10 are fastened to the main body 1 to define the space 9 between the second floor 8 and the main body 1 in a longitudinal direction of the body. A plurality of partition walls 10 may be provided such that the partition walls 10 divide the space 9 between the second floor 8 and the main body 1 into several separate departments. The partition wall 10 is a sheetlike piece and it may be formed of a steel or an aluminium sheet. The partition wall 10 may be one uniform piece, so it is easy to manufacture in automated sheet metal work machines. The partition wall 10 may also be dimensioned such that it extends from the first side 4 of the body to the second side 5 thereof.

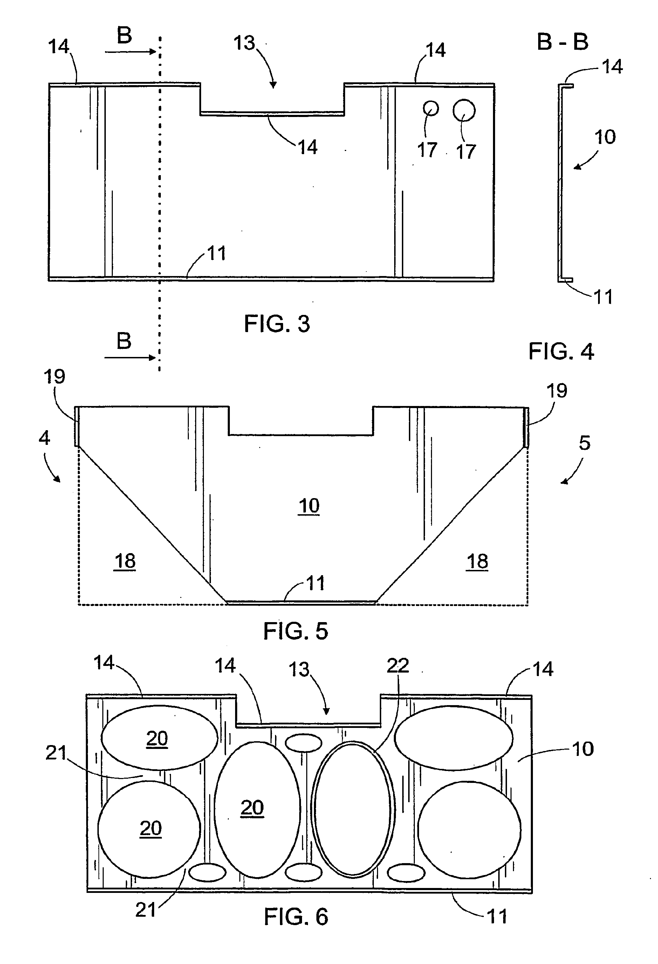

A horizontal lower edge of the partition wall 10 is provided with at least one first support section 11 which forms a section transverse with respect to the surface of the sheet. This first support section 11 contributes to supporting the second floor 8. The second floor 8 may be arranged on the side of an upper surface of the support section 11 and fastened e.g. by a screw joint or a welded joint. Alternatively, the second floor 8 may be glued to the support section 11. Furthermore, the partition wall 10 may be vertically dimensioned such that over an edge section 12 between the side 4, 5 and the longitudinal beams 2 it extends to the height of an upper edge of the longitudinal beam 2 while over a middle section 13 between the longitudinal beams 2 it extends to the height of a lower edge of the longitudinal beams 2. At least at the edge sections 12, a horizontal upper edge of the partition wall 10 is provided with a second support section 14. The first floor 7 may consist of a first and a second edge sections 7a and a middle section 7b therebetween. The edge sections 7a of the first floor may be supported against the second support section 14 residing at the upper edge of the partition wall 10. The middle section 7b of the first floor may be supported against an upper surface of a transverse beam 3. Of course, it is possible to provide the partition wall 10 with a suitable support section also for the middle section 7b of the first floor, e.g. as shown in Figure 3. If the body is a body of a bus, rail traffic vehicle or the like, passenger compartment seats may be fastened to the edge sections 7a of the first floor and the middle section 7b of the floor may serve as an aisle in the passenger compartment.

The support section 11, 14 may be formed by bending a section of a predetermined size of the partition wall 10 into a section transverse with respect to the plane surface thereof. The support section 11, 14 is quickly bent e.g. in a sheet-bending press. Furthermore, the support section 11, 14 formed by bending is an integral part of the rest of the structure of the partition wall 10, which is advantageous for the durability of the structure. In some cases, however, the support section 11, 14 may be a separate piece fastened to the partition wall 10 e.g. by welding, glue or a screw joint. The support sections 11 and 14 may point to the same direction, as shown in the figures or, alternatively, they may point to opposite directions.

As can be seen in Figure 1, the partition wall 10 may be arranged against a side of a transverse beam 3 and fastened by welding to a longitudinal beam 2 as well as to a transverse beam 3. Some welded seams are marked in bold line in Figure 1 for the sake of example. Alternatively, the partition wall 10 may be fastened to the main body 1 by means of screws or the like. An advantage of a screw joint is at least the fact that the joint is very durable against a fatiguing load. In addition, the screw joint is easy to open, if necessary.

Plug welding 15 may also be applied to the joint between the partition wall 10 and the main body 1. For the joint, openings are cut into the partition wall 10 e.g. by means of waterjet cutting to enable welding to the beams of the main body 1 to be carried out therethrough.

Over the section above the transverse beam 3, the partition wall 10 may be fastened to a vertical beam 6 by a screw joint, and over the section below the transverse beam 3 to the vertical beam 6 by a welded joint. Such a solution is advantageous because it has been noticed that the fastening of an upper part of the partition wall is subjected to a fatiguing load, and the screw joint endures it well. The fastening of a lower part of the partition wall 10, in turn, is subjected to great shear forces that can be managed well by the welded joint.

The floor 7, 8 may be fastened to the support section 11, 14 of the partition wall 10 e.g. by glue, welding, screws or rivets. Furthermore, the second floor 8 may be supported by means of one or more longitudinal floor beams 16. Two floor beams 16 may be arranged at a distance from one another. The number of floor beams 16, the cross-sectional profile and the material may be chosen case-specifically. The floor beams 16 may be tubular beams manufactured e.g. from aluminium or steel. The floor beams 16 may be supported against the main body 1 by vertical supporters. For the sake of clarity, Figures 1 and 2 show no such supporters.

It can be seen in Figures 3 and 4 that the partition wall 10 may be a uniform piece cut from a sheet material which may be provided with support sections 11 and 14 by bending. The middle section 13 may also be provided with a support section 14 against which the floor 7b of the aisle of the passenger compartment may be supported. The partition wall 10 may be manufactured from a metal sheet, such as a thin steel or aluminium sheet. The thickness of a partition wall 10 made from a metal sheet may be 1 to 6 mm. It may further be seen in Figure 3 that the partition wall 10 may include a plurality of openings 17 wherethrough the necessary tubes and wires can be arranged. It is simple and quick to manufacture such openings e.g. by means of waterjet cutting.

It is also possible to manufacture the partition wall 10 from a composite material. Consequently, the partition wall 10 may be made e.g. from reinforced plastic comprising at least one plastics material and at least one fibrous material.

It can be seen in Figure 5 that sections 18, marked in broken lines, at which the partition wall 10 does not extend from the first side 4 to the second side 5 may have been removed from the lower part of the partition wall 10. These sections 18 enable long objects to be transported in the luggage compartment 9. Naturally, the sections 18 may also be designed differently from that shown in Figure 5 for the sake of example. The vertical edges of the partition wall 10 according to Figure 5 further include third support sections 19 that are transverse sections with respect to the plane of the partition wall 10. The third support sections 19 may be manufactured by bending the sheet material of the partition wall 10, or they may be separate pieces fastened to the vertical edges of the partition wall 10. The partition wall 10 may be fastened to the vertical beams 6 by means of the third support sections 19.

Figure 6 shows still another structure of a partition wall 10. The partition wall 10 may be provided with a plurality of openings 20 such that the openings 20 lighten the structure of the partition wall 10, forming a lattice-like structure. Thin intersections 21 reside between the openings 20. In order to form dimensionally accurate and high quality openings 20 to the relatively thin sheetlike structure, e.g. waterjet cutting may be used. Of course, thermal and mechanical cutting methods may also be applied. Furthermore, it is possible to form the openings 20 such that the edges of the openings 20 are provided with edge sections 22 transverse with respect to the plane of the partition wall 10 to support the structure of the partition wall. Openings 20 equipped with an edge section 22 may be formed e.g. by means of a press tool.

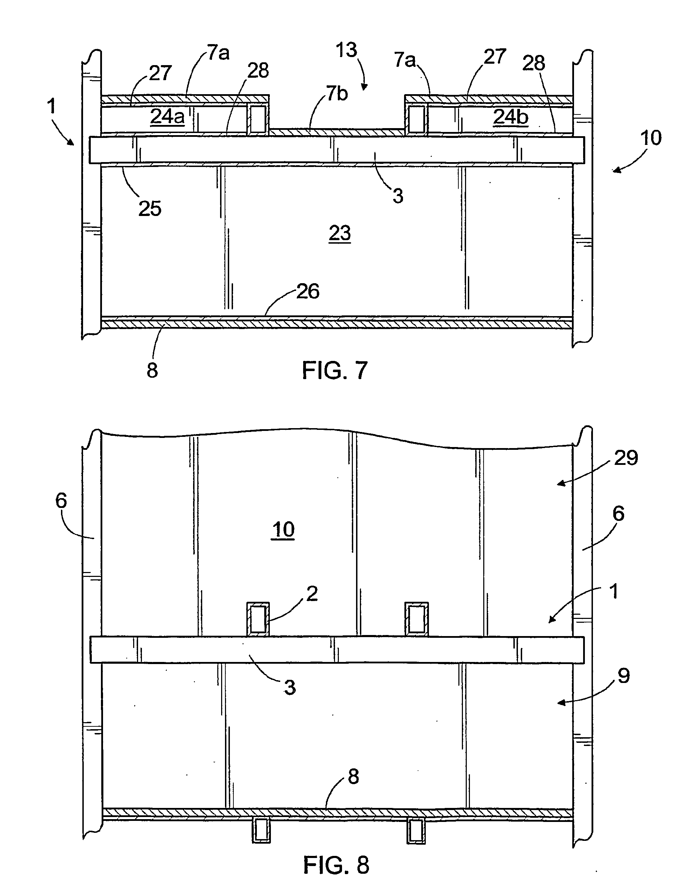

Figure 7 further shows an application wherein a partition wall 10 comprises a separate lower part 23 and an upper part 24. The lower part 23 is arranged on the side of the lower surface of a transverse beam 3 while the upper part 24 is arranged on the side of the upper surface of the transverse beam 3. The parts 23 and 24 may be fastened to the horizontal surface of the transverse beam 3 e.g. by a screw joint or welding. The upper edge of the part 23 may be provided with a support section 25 for fastening the transverse beam 3, and the lower edge of the part 23 may be provided with a support section 26 for supporting a second floor 8. The second floor 8 may be fastened on the side of the lower surface of the support section 26 as shown in Figure 7 or, alternatively, it may be fastened on the side of the upper surface of the support section 26 as shown in Figures 1 and 2. The upper edge of the upper part 24 of the partition wall 10 may be provided with a support part 27 to enable fastening to a first floor 7, and the lower edge of the upper part 24 may be provided with a support section 28 to enable fastening to the transverse beam 3. The upper part 24 may consist of two separate pieces 24a and 24b, a middle section 13 residing therebetween.

Figure 8 shows a construction wherein a partition wall 10 extends as a uniform piece from a luggage compartment 9 to a passenger compartment 29 located above longitudinal beams 2, thus forming at least a part of the partition wall of the passenger compartment. The partition wall 10 may thus extend from the side of the lower surface of a second floor 8 all the way to the ceiling of the passenger compartment 29. The partition wall 10 may be provided with openings for the longitudinal beams 2, and it may be welded to a side of a transverse beam 3. For the sake of clarity, Figure 8 shows no first floor 7. An advantage of an integrated partition wall 10 is that it makes the process of manufacture quicker. In addition, the structure can be light but still be highly capable of receiving loads.

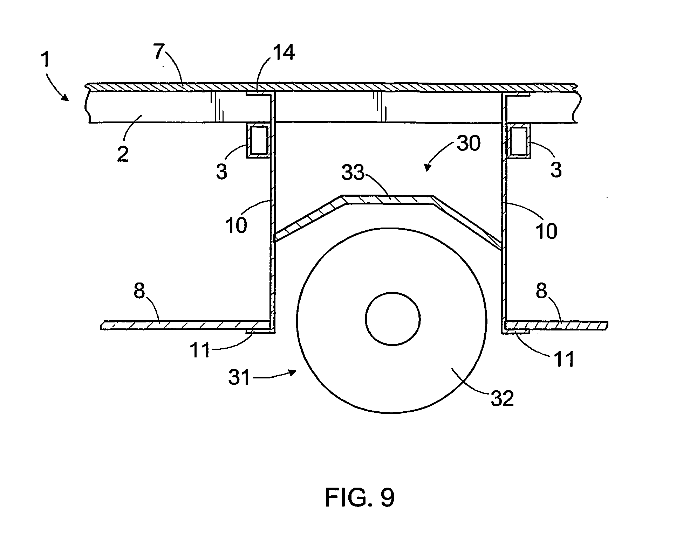

Figure 9 shows a construction wherein a partition wall 10 forms at least a part of the structure of a mudguard 30. A vehicle comprises at least two axles 31, each comprising at least two wheels 32. The axles 31 may be supported against a main body 1. Two partition walls 10 may be placed at both sides of the axles 31 such that the partition walls 10 define a space around a wheel 32. If necessary, a separate arch-like part 33 may be provided above the wheel 32. The arch-like part is not necessary but a first floor 7 may form a part of the mudguard 30. All in all, this construction simplifies the structure of the body and makes the process of manufacture quicker. In addition, the structure can be light. Another advantage is that mud and dirt easily fall away from a vertically arranged sheet structure with a smooth surface. No small spaces exist around the wheel 32 to gather dirt.

The drawings and the related description are only intended to illustrate the idea of the invention. The details of the invention may vary within the scope of the claims.

## Claims

1. A body of a vehicle, comprising:
a main body (1) formed of at least one longitudinal beam (2) and a plurality of transverse beams (3), the beams being interconnected,
a first floor (7) provided on the side of an upper surface of the main body (1);
a second floor (8) provided on the side of a lower surface of the main body (1), at a predetermined vertical distance from the main body (1), the second floor (8) being supported against the main body (1),
at least two partition walls (10) which are arranged transversely with respect to the longitudinal axis of the main body (1) and which reside substantially vertically between the main body (1) and the second floor (8) at a distance from one another, the partition walls (10) and the floors thus forming at least one free space (9) below the main body (1),
and wherein the partition wall (10) is a sheetlike piece immovably fastened at least to a transverse beam (3) of the main body (1),
the partition wall (10) comprises a horizontal lower edge provided with a first support section (11) transverse with respect to the plane surface of the partition wall (10),
and the first support section (11) is arranged to support the second floor (8).

2. A body as claimed in claim 1, **characterized in that**
the partition wall (10) is dimensioned to extend above the transverse beam (3) included in the main body (1),
the partition wall (10) comprises a horizontal upper edge provided with a second support section (14) transverse with respect to the plane surface of the partition wall (10), and **in that**
the second support section (14) is arranged to support the first floor (7).

3. A body as claimed in claim 1 or 2, **characterized in that**
the partition wall (10) is fastened by its side surface to a side surface of the transverse beam (3) included in the main body (1).

4. A body as claimed in any one of the preceding claims, **characterized in that**
the partition wall (10) is immovably fastened to the longitudinal beams (2) and to one transverse beam (3) included in the main body (1), and **in that**
the partition wall (10) is arranged to receive forces active between the beams (2, 3).

5. A body as claimed in any one of the preceding claims, **characterized in that**
the partition wall (10) is formed of an aluminium sheet whose thickness is 1 to 6 mm.

6. A body as claimed in any one of the preceding claims, **characterized in that**
the partition wall (10) is formed of a sheet material, and
the support section (11, 14) is formed by bending the sheet material into a section transverse with respect to the plane of the sheet.

7. A body as claimed in any one of the preceding claims, **characterized in that**
the body is a body of a bus, wherein at least one passenger compartment (29) resides above an upper surface of the first floor (7) and wherein at least one luggage compartment (9) resides between the first floor (7) and the second floor (8),
at least one partition wall (10) is arranged to form a wall structure both to the luggage compartment (9) and the passenger compartment (29).

8. A body as claimed in any one of the preceding claims, **characterized in that**
the body of the vehicle is provided with a longitudinal first side (4) and a longitudinal second side (5), and
the partition wall (10) is dimensioned to extend as a uniform piece from the first side (4) of the vehicle to the second side (5) thereof.

9. A body as claimed in any one of the preceding claims, **characterized in that**
the vehicle comprises at least two axles (31) fastened to the main body (1),
each axle (31) comprises at least two wheels (32),
a mudguard (30) resides at a wheel (32), and
at least one partition wall (10) is arranged to form at least a part of the mudguard (30).

10. A body as claimed in any one of the preceding claims, **characterized in that**
the partition wall (10) is provided with a plurality of openings (20), and **in that**
intersections (21) reside between the openings (20), forming a lattice-like structure.

## Patentansprüche

1. Fahrzeugkarosserie, die Folgendes umfasst:
einen Hauptaufbau (1), der aus wenigstens einem Längsträger (2) und mehreren Querträgern (3) geformt ist, wobei die Träger miteinander verbunden sind,
einen ersten Boden (7), der an der Seite einer oberen Fläche des Hauptaufbaus (1) bereitgestellt wird,
einen zweiten Boden (8), der an der Seite einer unteren Fläche des Hauptaufbaus (1), mit einem vorbestimmten vertikalen Abstand von dem Hauptaufbau (1), bereitgestellt wird, wobei der zweite Boden (8) an dem Hauptaufbau (1) getragen wird,
wenigstens zwei Trennwände (10), die quer in Bezug auf die Längsachse des Hauptaufbaus (1) angeordnet sind und die sich im Wesentlichen vertikal zwischen dem Hauptaufbau (1) und dem zweiten Boden (8) mit einem Abstand voneinander befinden, wobei die Trennwände (10) und die Böden so wenigstens einen Freiraum (9) unterhalb des Hauptaufbaus (1) bilden,
und wobei die Trennwand (10) ein plattenartiges Stück ist, das unbeweglich wenigstens an einem Querträger (3) des Hauptaufbaus (1) befestigt ist,
die Trennwand (10) eine horizontale Unterkante umfasst, die mit einer ersten Tragsektion (11), quer in Bezug auf die ebene Fläche der Trennwand (10), versehen ist,
und die erste Tragsektion (11) dafür ausgelegt ist, den zweiten Boden (8) zu tragen.

2. Fahrzeugkarosserie nach Anspruch 1, **dadurch gekennzeichnet, dass**
die Trennwand (10) so bemessen ist, dass sie sich oberhalb des in dem Hauptaufbau (1) eingeschlossenen Querträgers (3) erstreckt,
die Trennwand (10) eine horizontale Oberkante umfasst, die mit einer zweiten Tragsektion (14), quer in Bezug auf die ebene Fläche der Trennwand (10), versehen ist, und **dadurch**, **dass**
die zweite Tragsektion (14) dafür angeordnet ist, den ersten Boden (7) zu tragen.

3. Fahrzeugkarosserie nach Anspruch 1 oder 2, **dadurch gekennzeichnet, dass**
die Trennwand (10) durch ihre Seitenfläche an einer Seitenfläche des in dem Hauptaufbau (1) eingeschlossenen Querträgers (3) befestigt ist.

4. Fahrzeugkarosserie nach einem der vorhergehenden Ansprüche, **dadurch gekennzeichnet, dass**
die Trennwand (10) unbeweglich an den Längsträgern (2) und an einem in dem Hauptaufbau (1) eingeschlossenen Querträger (3) befestigt ist, und **dadurch**, **dass**
die Trennwand (10) dafür angeordnet ist, die zwischen den Trägern (2, 3) wirkenden Kräfte aufzunehmen.

5. Fahrzeugkarosserie nach einem der vorhergehenden Ansprüche, **dadurch gekennzeichnet, dass**
die Trennwand (10) aus einem Aluminiumblech geformt ist, dessen Stärke 1 bis 6 mm beträgt.

6. Fahrzeugkarosserie nach einem der vorhergehenden Ansprüche, **dadurch gekennzeichnet, dass**
die Trennwand (10) aus einem Blechmaterial geformt ist und
die Tragsektion (11, 14) durch Biegen des Blechmaterials zu einer Sektion, quer in Bezug auf die Ebene des Blechs, geformt ist.

7. Fahrzeugkarosserie nach einem der vorhergehenden Ansprüche, **dadurch gekennzeichnet, dass**
der Aufbau der Aufbau eines Busses ist, wobei sich wenigstens ein Fahrgastabteil (29) oberhalb einer oberen Fläche des ersten Bodens (7) befindet und wobei sich wenigstens ein Gepäckabteil (9) zwischen dem ersten Boden (7) und dem zweiten Boden (8) befindet,
wenigstens eine Trennwand (10) so angeordnet ist, dass sie eine Wandstruktur sowohl in dem Gepäckabteil (9) als auch in dem Fahrgastabteil (29) bildet.

8. Fahrzeugkarosserie nach einem der vorhergehenden Ansprüche, **dadurch gekennzeichnet, dass**
der Aufbau des Fahrzeugs mit einer ersten Längsseite (4) und einer zweiten Längsseite (5) versehen ist und
die Trennwand (10) so bemessen ist, dass sie sich als ein gleichförmiges Stück von der ersten Seite (4) des Fahrzeugs bis zu der zweiten Seite (5) desselben erstreckt.

9. Fahrzeugkarosserie nach einem der vorhergehenden Ansprüche, **dadurch gekennzeichnet, dass**
das Fahrzeug wenigstens zwei an dem Hauptaufbau (1) befestigte Achsen (31) umfasst,
jede Achse (31) wenigstens zwei Räder (32) umfasst,
sich ein Kotflügel (30) an einem Rad (32) befindet und
wenigstens eine Trennwand (10) so angeordnet ist, dass sie wenigstens einen Teil des Kotflügels (30) bildet.

10. Fahrzeugkarosserie nach einem der vorhergehenden Ansprüche, **dadurch gekennzeichnet, dass**
die Trennwand (10) mit mehreren Öffnungen (20) versehen ist, und **dadurch**, **dass**
sich zwischen den Öffnungen (20) Zwischensektionen (21) befinden, die eine gitterartige Struktur bilden.

## Revendications

1. Corps d'un véhicule, comprenant :
◆ un corps principal (1) formé d'au moins une poutre longitudinale (2) et d'une pluralité de poutres (3) transversales, les poutres étant interconnectées,
◆ un premier plancher (7) prévu sur le côté d'une surface supérieure du corps principal (1) ;
◆ un second plancher (8) prévu sur le côté d'une surface inférieure du corps principal (1), à une distance verticale prédéterminée du corps principal (1), le second plancher (8) étant supporté contre le corps principal (1),
◆ au moins deux parois de séparation (10) qui sont disposées transversalement par rapport à l'axe longitudinal du corps principal (1) et qui se situent sensiblement verticalement entre le corps principal (1) et le second plancher (8) à une distance l'une de l'autre, les parois de séparation (10) et les planchers formant ainsi au moins un espace libre (9) sous le corps principal (1),
◆ et dans lequel la paroi de séparation (10) est une pièce en forme de feuille fixée de manière immobile au moins à une poutre transversale (3) du corps principal (1),
◆ la paroi de séparation (10) comprend un bord inférieur horizontal pourvu d'une première section de support (11) transversale par rapport à la surface plane de la paroi de séparation (10),
◆ et la première section de support (11) est agencée pour supporter le second plancher (8).

2. Corps selon la revendication 1, **caractérisé en ce que**
◆ la paroi de séparation (10) est dimensionnée pour s'étendre au-dessus de la poutre transversale (3) incluse dans le corps principal (1),
◆ la paroi de séparation (10) comprend un bord supérieur horizontal pourvu d'une seconde section de support (14) transversale par rapport à la surface plane de la paroi de séparation (10), et **en ce que**
◆ la seconde section de support (14) est agencée pour supporter le premier plancher (7).

3. Corps selon la revendication 1 ou 2, **caractérisé en ce que** la paroi de séparation (10) est fixée par sa surface latérale à une surface latérale de la poutre transversale (3) incluse dans le corps principal (1).

4. Corps selon l'une quelconque des revendications précédentes, **caractérisé en ce que**
◆ la paroi de séparation (10) est fixée de manière immobile aux poutres longitudinales (2) et à une poutre transversale (3) incluse dans le corps principal (1), et **en ce que**
**◆** la paroi de séparation (10) est agencée pour recevoir des forces actives entre les poutres (2, 3).

5. Corps selon l'une quelconque des revendications précédentes, **caractérisé en ce que** la paroi de séparation (10) est formée d'une feuille d'aluminium dont l'épaisseur est de 1 à 6 mm.

6. Corps selon l'une quelconque des revendications précédentes, **caractérisé en ce que**
◆ la paroi de séparation (10) est formée d'un matériau en feuille, et
◆ la section de support (11, 14) est formée en pliant le matériau en feuille dans une section transversale par rapport au plan de la feuille.

7. Corps selon l'une quelconque des revendications précédentes, **caractérisé en ce que**
◆ le corps est un corps d' un bus, dans lequel au moins un compartiment passager (29) se situe au-dessus d'une surface supérieure du premier plancher (7) et dans lequel au moins un compartiment bagages (9) se situe entre le premier plancher (7) et le second plancher (8),
◆ au moins une paroi de séparation (10) est agencée pour former une structure de paroi pour le compartiment bagages (9) et le compartiment passager (29).

8. Corps selon l'une quelconque des revendications précédentes, **caractérisé en ce que**
◆ le corps du véhicule est pourvu d'un premier côté longitudinal (4) et d'un second côté longitudinal (5), et
◆ la paroi de séparation (10) est dimensionnée pour s'étendre en tant que pièce uniforme du premier côté (4) du véhicule au second côté (5) de celui-ci.

9. Corps selon l'une quelconque des revendications précédentes, **caractérisé en ce que**
◆ le véhicule comprend au moins deux essieux (31) fixés au corps principal (1),
◆ chaque essieu (31) comprend au moins deux roues (32),
◆ un garde-boue (30) se situe au niveau d'une roue (32), et
◆ au moins une paroi de séparation (10) est agencée pour former au moins une partie du garde-boue (30).

10. Corps selon l'une quelconque des revendications précédentes, **caractérisé en ce que**
◆ la paroi de séparation (10) est pourvue d'une pluralité d'ouvertures (20), et **en ce que**
◆ des intersections (21) se situent entre les ouvertures (20), formant ainsi une structure en treillis.
